# EUROPÄISCHE PATENTSCHRIFT

(11) **EP 4 056 864 B1**
(45) Veröffentlichungstag und Bekanntmachung des Hinweises auf die Patenterteilung: **10.04.2024**
(21) Anmeldenummer: 21215989.1
(22) Anmeldetag: 20.12.2021
(51) Int. Cl.: F16C 27/02, F16C 27/06, F16F 3/087

(54) **BUCHSENLAGER**
BUSH BEARING
PALIER À DOUILLE

(30) Priorität: 12.03.2021 DE 102021106099
(43) Veröffentlichungstag der Anmeldung: 14.09.2022
(73) Patentinhaber: NBJX Europe GmbH, 85399 Hallbergmoos (DE)
(72) Erfinder: Lübke, Florian, 85435 Erding (DE); Schlegel, Robert, 80804 München (DE); Holst, Meinert, 31515 Wunstorf (DE)
(74) Vertreter: Lichtnecker, Markus Christoph

(56) Entgegenhaltungen:
- DE-A1- 4 037 966
- DE-A1- 19 605 859
- DE-A1-102007 016 226
- DE-A1-102019 109 608

## Beschreibung

Die Erfindung betrifft ein Buchsenlager, aufweisend ein Innenteil, ein Außenteil und eine Radialfeder, welche sich in radialer Richtung zwischen dem Innenteil und dem Außenteil erstreckt.

Derartige Buchsenlager sind z.B. aus DE 10 2019 109 608 A1, DE 196 05 859 A1 und DE 40 37 966 A1 grundsätzlich bekannt und werden beispielsweise bei Fahrzeugen eingesetzt, z.B. zur Lagerung von Komponenten des Motors und/oder des Fahrgestells. DE 10 2007 016226 A1 offenbart ein Buchsenlager nach dem Oberbegriff des Anspruchs 1.

Je nach Einsatzzweck und/oder Fahrzeugtyp muss das Buchsenlager bezogen auf den Umfang eine bestimmte radiale Steifigkeit aufweisen. Hierzu kommen Radialfedern, welche auch als Lagerkörper bezeichnet werden, zum Einsatz.

Meist sind die Radialfedern als Radialstege mit einer hohen Steifigkeit ausgebildet, welche sich zwischen dem Innenteil und dem Außenteil erstrecken.

Während sich die radiale Steifigkeit dadurch exakt einstellen lässt, ist dies für die axiale Steifigkeit hingegen nicht möglich. Die axiale Steifigkeit des Buchsenlagers stellt sich in Abhängigkeit der Radialstege ein und ist nahezu unbeeinflussbar. Wird hierbei versucht, die axiale Steifigkeit über die Radialstege einzustellen, wirkt sich dies negativ auf das lineare Verhalten der radialen Steifigkeit aus.

Es ist daher eine Aufgabe der Erfindung, ein Buchsenlager sowie ein Verfahren zur Herstellung eines Buchsenlagers zu schaffen, bei dem auf einfache Weise die radiale und axiale Steifigkeit eingestellt werden.

Die Lösung dieser Aufgabe erfolgt durch den Gegenstand sowie das Verfahren der unabhängigen Ansprüche.

Erfindungsgemäß weist das Buchsenlager ein Innenteil und ein Außenteil auf.

Das Innenteil, welches auch als Innenkern, bezeichnet wird, kann zum Beispiel länglich ausgebildet sein.

Beispielsweise kann das Innenteil eine kreisförmige, elliptische, eckige und/oder kleeblattförmige Querschnittsfläche aufweisen.

Bevorzugt ist das Innenteil bezüglich einer Längsachse des Buchsenlagers rotationsymmetrisch ausgebildet.

Vorzugsweise weist das Innenteil eine zentrale, sich längs erstreckende, z.B. zylinderförmige, Aussparung auf.

Beispielsweise kann das Innenteil ein Metall- und/oder Kunststoffmaterial umfassen oder daraus bestehen.

Das Außenteil, welches auch als Außenhülse oder Lageraußenhülse bezeichnet wird, kann zum Beispiel länglich ausgebildet sein.

Beispielsweise kann das Außenteil einen Hohlzylinder bilden.

Bevorzugt ist das Außenteil bezüglich der Längsachse des Buchsenlagers rotationsymmetrisch ausgebildet.

Beispielsweise kann das Außenteil ein Metall- und/oder Kunststoffmaterial umfassen oder daraus bestehen.

Vorzugsweise umgibt das Außenteil das Innenteil. Das Außenteil und das Innenteil sind zueinander vorzugsweise koaxial und/oder konzentrisch bezüglich einer gemeinsamen Längsachse angeordnet.

Lasten und/oder Schwingungen können beispielsweise in das Innenteil eingeleitet werden. Das Außenteil leitet schließlich die geminderten Schwingungen weiter. Alternativ oder zusätzlich können z.B. Lasten und/oder Schwingungen in das Außenteil eingeleitet werden. Das Innenteil leitet schließlich die geminderten Schwingungen weiter.

Das Buchsenlager weist eine hauptsächlich in radialer Richtung wirkende Radialfeder auf, welche sich in radialer Richtung zwischen dem Innenteil und dem Außenteil erstreckt.

Die Wirkung der Radialfeder in radialer Richtung ist größer als die Wirkung in axialer Richtung.

Der Hauptzweck der Radialfeder ist somit das Einstellen der radialen Steifigkeit, während die axiale Steifigkeit nicht bzw. lediglich unwesentlich beeinflusst wird.

Das Buchsenlager weist eine hauptsächlich in axialer Richtung wirkende Axialfeder auf, welche sich zumindest abschnittsweise in axialer Richtung zwischen dem Innenteil und dem Außenteil erstreckt.

Die Wirkung der Axialfeder in axialer Richtung ist größer als die Wirkung in radialer Richtung.

Der Hauptzweck der Axialfeder ist somit das Einstellen der axialen Steifigkeit, während die radiale Steifigkeit nicht bzw. lediglich unwesentlich beeinflusst wird.

Die Begriffe Radialfeder und Axialfeder sind breit zu verstehen und umfassen auch Kunststoffe mit federnden und/oder elastischen Eigenschaften.

Vorzugsweise ist die Radialfeder und/oder die Axialfeder als Elastomer ausgebildet. Bevorzugt sind sowohl die Radialfeder als auch die Axialfeder als Elastomer ausgebildet. Beispielsweise können die Radialfeder und die Axialfeder aus dem gleichen Elastomer sein. Beispielsweis können die Radialfeder und die Axialfeder miteinander verknüpft und z.B. aus einem Guss sein.

Bevorzugt ist die Radialfeder und/oder die Axialfeder jeweils mit dem Innenteil und dem Außenteil verbunden, beispielsweise vulkanisiert. Dadurch wird eine sichere Verbindung zwischen dem Innenteil und dem Außenteil geschaffen.

Die Radialfeder und die Axialfeder sind derart ausgebildet und/oder angeordnet, dass die radiale Steifigkeit des Buchsenlagers durch die Radialfeder und die axiale Steifigkeit des Buchsenlagers durch die Axialfeder unabhängig voneinander einstellbar sind. Beispielsweise lässt sich die Steifigkeit des Buchsenlagers in x-, y- und z- Richtung unabhängig voneinander einstellen. Zudem ergeben sich hohe lineare Steifigkeitsverläufe.

Vorzugsweise ist bei der Radialfeder der axiale Anteil zur Steifigkeit gering. Dieser kann beispielsweise maximal 30 %, 20 % oder 10 % des axialen Anteils zur Steifigkeit der Axialfeder betragen. Beispielsweise beträgt der axiale Anteil zur Steifigkeit der Radialfeder zwischen 20 % und 30 %.

Vorzugsweise ist bei der Axialfeder der radiale Anteil zur Steifigkeit gering. Dieser kann beispielsweise maximal 30 %, 20 %, 15 %, 10 %, 5 %, 4 %, 3 %, 2 % oder 1 % des radialen Anteils zur Steifigkeit der Radialfeder betragen. Beispielsweise beträgt der radiale Anteil zur Steifigkeit der Axialfeder zwischen 5 % und 15 %, bevorzugt 10 %.

Dadurch, dass für die radiale Steifigkeit hauptsächlich die Radialfeder und für die axiale Steifigkeit hauptsächlich die Axialfeder zuständig ist, können die radiale und axiale Steifigkeit des Buchsenlagers auf einfache Weise eingestellt werden. Beispielsweise kann die axiale Steifigkeit im Rahmen des Bauraums beliebig und unabhängig von der radialen Steifigkeit eingestellt werden. Das lineare Verhalten der radialen Steifigkeit wird durch die Axialfeder nicht negativ beeinflusst.

Auch die Herstellung gestaltet sich durch die Aufteilung in eine Radialfeder und eine Axialfeder einfach und kostengünstig.

Die Axialfeder greift in axialer Richtung am Innenteil und Außenteil an. Beispielsweise greift die Axialfeder stirnseitig am Innenteil an und erstreckt sich von dort in einer schrägen und/oder diagonalen Richtung nach außen zum Außenteil.

Das Innenteil ist einteilig ausgebildet.

Die Radialfeder und die Axialfeder sind als voneinander getrennte Bauteile ausgebildet.

Die radiale und die axiale Steifigkeit können dadurch auf einfache Weise unabhängig voneinander eingestellt werden.

Auch die Herstellung gestaltet sich bei voneinander getrennten Bauteilen einfach und kostengünstig.

Weiterbildungen der Erfindung sind auch den abhängigen Ansprüchen, der Beschreibung sowie den beigefügten Zeichnungen zu entnehmen.

Nach einer Ausführungsform ist ein Verbindungselement vorgesehen, über das die Radialfeder und die Axialfeder miteinander verbunden sind.

Vorzugsweise ist das Verbindungselement als Elastomer ausgebildet. Bevorzugt sind sowohl die Radialfeder, die Axialfeder als auch das Verbindungselement als Elastomer ausgebildet. Beispielsweise kann das Verbindungselement aus dem gleichen Elastomer wie die Radialfeder und/oder die Axialfeder sein.

Insgesamt können die Radialfeder, die Axialfeder und das Verbindungselement ein gemeinsames Bauteil bilden.

Die Radialfeder und die Axialfeder sowie das Verbindungselement können derart miteinander verbunden sein, dass Hinterschneidungen vermieden werden. Die Herstellung gestaltet sich dadurch einfach und kostengünstig. So kann beispielsweise ein Auf-Zu-Werkzeug eingesetzt werden. Komplexe, vielteilige Werkzeuge sind nicht notwendig.

Gemäß einer weiteren Ausführungsform weist die Radialfeder wenigstens oder genau zwei, drei, vier, fünf, sechs, sieben oder acht Stege auf, welche sich in radialer Richtung zwischen dem Innenteil und dem Außenteil erstrecken.

Die Stege können z.B. radial gleichmäßig oder ungleichmäßig verteilt sein. Beispielsweise können vier Stege vorgesehen sein, wobei je zwei Stege an bezüglich des Innenteils gegenüberliegenden Seiten angeordnet sind.

Nach einer weiteren Ausführungsform ist genau eine Axialfeder vorgesehen.

Die Axialfeder kann beispielsweise asymmetrisch, z.B. nicht punktsymmetrisch und/oder nicht spiegelsymmetrisch, ausgebildet und/oder angeordnet sein.

Beispielsweise kann die Axialfeder in Längsrichtung des Buchsenlagers vor oder nach der Radialfeder angeordnet sein.

Vorzugsweise ist die Axialfeder in einem vorderen oder hinteren Drittel des Buchsenlagers angeordnet.

Vorzugsweise ist die Axialfeder stirnseitig am Innenteil, am Außenteil und/oder am Buchsenlager angeordnet. Die Axialfeder kann sich hierbei z.B. in axialer Richtung stirnseitig am Innenteil und/oder Außenteil abstützen.

Alternativ können auch beispielsweise zwei Axialfedern vorgesehen sein, wobei jede Axialfeder an gegenüberliegenden Stirnseiten des Innenteils, des Außenteils und/oder des Buchsenlagers angeordnet sein kann.

Eine Axialfeder kann vorzugsweise in einem vorderen Drittel und die andere Axialfeder in einem hinteren Drittel des Buchsenlagers angeordnet sein.

Gemäß einer weiteren Ausführungsform weist die Axialfeder eine, vorzugsweise geteilte, Halbschale auf.

Die Form ist jedoch grundsätzlich beliebig und kann an die Gegebenheiten und/oder die gewünschte axiale Steifigkeit angepasst sein. Es kann z.B. lediglich eine Axialfeder je Radialsteg aufgebaut sein. Alternativ kann die Axialfeder über alle Stege verlaufen.

Nach einer weiteren Ausführungsform schließt wenigstens eine Innenseite der Axialfeder mit einer zur Längsachse des Innenteils parallelen Achse einen spitzen

Winkel ein. Durch den spitzen Winkel erhöht sich beispielsweise die Lebensdauertauglichkeit im Vergleich zu einem stumpfen Winkel in beiden Richtungen.

Die Axialfeder erstreckt sich bezüglich dieser Achse gewissermaßen in einer schrägen und/oder diagonalen Richtung zwischen dem Innenteil und dem Außenteil.

Durch die schräge Anordnung können die axialen Kräfte abgefedert werden.

Beispielsweise kann die Axialfeder mit einer zur Längsachse parallelen Achse einen spitzen Winkel einschließen.

Vorzugsweise kann z.B. durch die Wahl des Winkels die axiale Steifigkeit eingestellt werden.

Nach einer weiteren Ausführungsform weist das Innenteil und/oder das Außenteil eine Abwinkelung als Angriffsbereich für die Axialfeder auf.

Beispielsweise kann sich das Innenteil verjüngen und/oder spitz in Richtung der Längsachse zulaufen. Das Innenteil kann gewissermaßen in Richtung der Längsachse abgeknickt sein.

Durch die Abwinkelung kann sich beispielsweise die Querschnittsfläche und/oder der Außendurchmesser des Innenteils verringern.

Das Außenteil kann z.B. an der Innenseite einen, die Abwinkelung aufweisenden, in Richtung der Längsachse gerichteten Vorsprung aufweisen. Das Außenteil bzw. ein innerer Bereich des Außenteils kann gewissermaßen in Richtung der Längsachse abgeknickt sein. Der Außenumfang des Außenteils kann hingegen unverändert sein. Alternativ kann das Außenteil als Ganzes abgewinkelt sein.

Durch die Abwinkelung kann sich beispielsweise die Querschnittsfläche und/oder der Innendurchmesser des Außenteils verringern.

Vorzugsweise weisen sowohl das Innenteil als auch das Außenteil eine Abwinkelung auf. Beispielsweise sind die dadurch gebildeten Angriffsbereiche parallel zueinander orientiert.

Die Axialfeder kann sich vorzugsweise zwischen der Abwinkelung des Innenteils und der Abwinkelung des Außenteils erstrecken.

Beispielsweise kann sich die Axialfeder rechtwinklig zum Angriffsbereich des Innenteils und/oder rechtwinklig zum Angriffsbereich des Außenteils erstrecken.

Durch die Abwinkelungen wird eine Kraft in axialer Richtung abgetragen.

Die Erfindung betrifft auch ein Verfahren zur Herstellung eines erfindungsgemäßen Buchsenlagers.

Hierbei werden eine sich in radialer Richtung zwischen einem Innenteil und einem Außenteil erstreckende, hauptsächlich in radialer Richtung wirkende Radialfeder und eine sich zumindest abschnittsweise zwischen dem Innenteil und dem Außenteil erstreckende, hauptsächlich in axialer Richtung wirkende Axialfeder an das Innenteil und das Außenteil in einem Arbeitsschritt anvulkanisiert.

Die Radialfeder und die Axialfeder sind somit fest mit dem Innenteil und dem Außenteil verbunden.

Vorzugsweise werden die Radialfeder und/oder die Axialfeder derart ausgebildet und/oder angeordnet, dass die radiale Steifigkeit des Buchsenlagers durch die Radialfeder und die axiale Steifigkeit des Buchsenlagers durch die Axialfeder unabhängig voneinander eingestellt werden. Das Einstellen kann z.B. durch die Form, die Position und/oder das Material erfolgen. Auch durch die Ausbildung des Innenteils und/oder des Außenteils, z.B. die Form und/oder den Grad der Abwinkelung des Angriffsbereichs des Innenteils und/oder des Außenteils, kann die Steifigkeit in Kombination mit der Radialfeder und/oder der Axialfeder eingestellt werden.

Das Buchsenlager wird vorzugsweise mit einem Auf-Zu-Werkzeug hergestellt. Beispielsweise können die Radialfeder und die Axialfeder sowie gegebenenfalls ein optionales Verbindungselement in einem Arbeitsschritt an das Innenteil und das Außenteil anvulkanisiert werden.

Vorzugsweise weisen die Radialfeder und die Axialfeder sowie gegebenenfalls ein optionales Verbindungselement insgesamt keine oder lediglich eine Hinterschneidung auf. Dies gestaltet die Fertigung besonders einfach und kostengünstig. So ist lediglich ein Arbeitsschritt erforderlich, um die Struktur in das Buchsenlager einzubringen.

Falls eine Hinterschneidung vorgesehen ist, kann z.B. ein Schwert eingesetzt werden, um die Hinterschneidung einzubringen.

Alle hier beschriebenen Ausführungsformen und Bauteile der Vorrichtung sind vorzugsweise dazu ausgebildet, nach dem hier beschriebenen Verfahren hergestellt zu werden. Ferner können alle hier beschriebenen Ausführungsformen der Vorrichtung sowie alle hier beschriebenen Ausführungsformen des Verfahrens jeweils miteinander kombiniert werden, wie in den anhängigen Ansprüche definiert, vorzugsweise auch losgelöst von der konkreten

Ausgestaltung, in deren Zusammenhang sie erwähnt werden.

Die Erfindung wird im Folgenden beispielhaft unter Bezugnahme auf die Zeichnungen beschrieben. Es zeigen:
- Fig. 1: eine schematische Schnittansicht einer Ausführungsform eines erfindungsgemäßen Buchsenlagers,
- Fig. 2: eine Vorderansicht einer Ausführungsform eines erfindungsgemäßen Buchsenlagers,
- Fig. 3: eine Perspektivansicht des Buchsenlagers gemäß Fig. 2,
- Fig. 4: eine Perspektivansicht des Buchsenlagers gemäß Fig. 2 ohne Außenteil,
- Fig. 5: eine Rückansicht einer Ausführungsform eines erfindungsgemäßen Buchsenlagers,
- Fig. 6: eine Perspektivansicht des Buchsenlagers gemäß Fig. 5, und
- Fig. 7: eine Perspektivansicht des Buchsenlagers gemäß Fig. 5 ohne Außenteil.

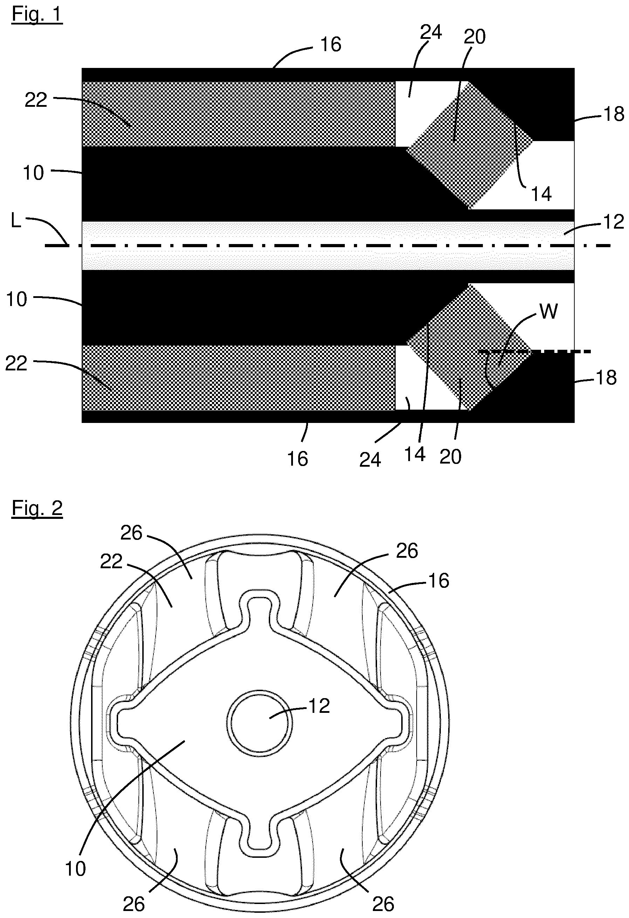

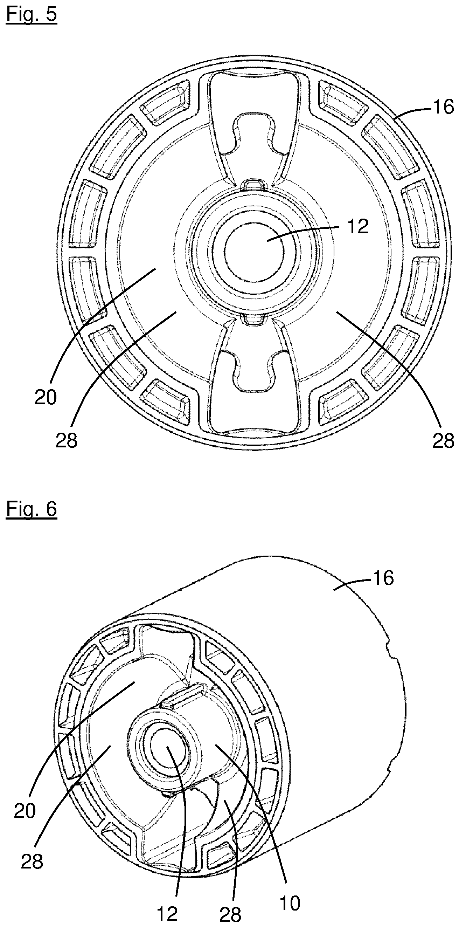

Zunächst ist zu bemerken, dass die dargestellten Ausführungsformen rein beispielhafter Natur sind. So können einzelne Merkmale nicht nur in der gezeigten Kombination, sondern auch in Alleinstellung oder in anderen technisch sinnvollen Kombinationen realisiert sein. Beispielsweise können die Merkmale einer Ausführungsform beliebig mit Merkmalen einer anderen Ausführungsform kombiniert werden. Vorzugsweise kann ein Buchsenlager eine in Fig. 2 gezeigte Vorderseite und eine in Fig. 5 gezeigte Rückseite aufweisen. Dies ist jedoch nicht zwingend. Die Form, Anordnung und/oder Anzahl der Radialfeder und/oder Axialfeder ist grundsätzlich beliebig. Beispielsweise kann die Radialfeder beliebig viele Stege aufweisen.

Enthält eine Figur ein Bezugszeichen, welches im unmittelbar zugehörigen Beschreibungstext nicht erläutert wird, so wird auf die entsprechenden vorhergehenden bzw. nachfolgenden Ausführungen in der Figurenbeschreibung Bezug genommen. So werden für gleiche bzw. vergleichbare Bauteile in den Figuren dieselben Bezugszeichen verwendet und diese nicht nochmals erläutert.

Fig. 1 zeigt ein Buchsenlager mit einem Innenteil 10 und einer Längsachse L. Das Innenteil 10 weist eine zentrale Aussparung 12 auf.

An einem Endbereich weist das Innenteil 10 eine Abwinkelung 14 auf, sodass sich dieses verjüngt.

Außen wird das Buchsenlager durch ein Außenteil 16 begrenzt. Das Innenteil 10 und das Außenteil 16 sind vorzugsweise rotationssymmetrisch bezüglich der Längsachse L.

Das Außenteil 16 weist an einem Endbereich einen, eine Abwinkelung 14 aufweisenden, in Richtung der Längsachse L gerichteten Vorsprung 18 auf.

Eine Innenseite der Axialfeder 16 schließt mit einer zur Längsachse L des Innenteils parallelen Achse einen spitzen Winkel Wein.

Die Abwinkelungen 14 bilden Angriffsbereiche für eine Axialfeder 20.

Die Axialfeder 20 ist schräg zwischen dem Innenteil 10 und dem Außenteil 16 angeordnet und wirkt hauptsächlich in axialer Richtung.

Beispielsweise kann die Axialfeder 20 rotationssymmetrisch bezüglich der Längsachse L ausgebildet sein.

Zusätzlich zur Axialfeder 20 ist eine hauptsächlich in radialer Richtung wirkende Radialfeder 22 vorgesehen, welche sich in radialer Richtung zwischen dem Innenteil 10 und dem Außenteil 16 erstreckt.

Beispielsweise kann die Radialfeder 22 rotationssymmetrisch bezüglich der Längsachse L ausgebildet sein.

Die Axialfeder 20 und die Radialfeder 22 können optional durch ein Verbindungselement 24 verbunden sein. Dies ist jedoch nicht erforderlich.

Die Radialfeder 22 und die Axialfeder 24 sind derart ausgebildet, dass die radiale Steifigkeit des Buchsenlagers durch die Radialfeder 22 und die axiale Steifigkeit des Buchsenlagers durch die Axialfeder 24 unabhängig voneinander einstellbar sind.

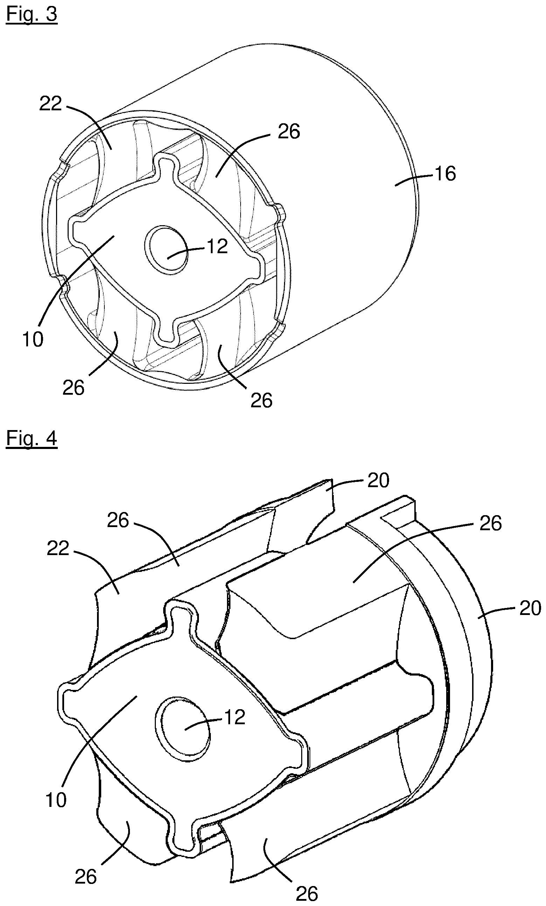

Fig. 2 bis 4 zeigen eine Ausführungsform einer Radialfeder 22 eines erfindungsgemäßen Buchsenlagers. Zur besseren Sichtbarkeit ist in Fig. 4 das Außenteil 16 nicht dargestellt.

Die Radialfeder 22 weist vier Stege 26 auf. Je zwei Stege 26 können übereinander an unterschiedlichen Seiten des Innenteils 10 angeordnet sein. Die Form, Anordnung und/oder Anzahl der Stege 26 ist grundsätzlich beliebig und kann variiert werden, um die gewünschte radiale Steifigkeit zu erreichen.

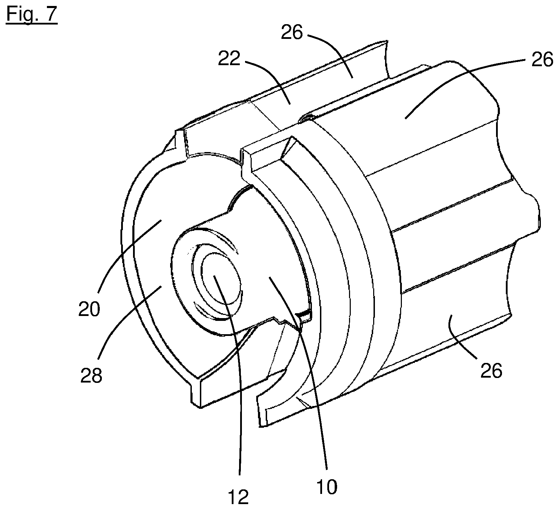

Fig. 5 bis 7 zeigen eine Ausführungsform einer Axialfeder 20 eines erfindungsgemäßen Buchsenlagers. Zur besseren Sichtbarkeit ist in Fig. 7 das Außenteil 16 nicht dargestellt.

Die Axialfeder 20 ist stirnseitig angeordnet und weist eine geteilte Halbschale 28 auf.

### Bezugszeichenliste

- 10: Innenteil
- 12: Aussparung
- 14: Abwinkelung, Angriffsbereich
- 16: Außenteil
- 18: Vorsprung
- 20: Axialfeder
- 22: Radialfeder
- 24: Verbindungselement
- 26: Steg
- 28: Halbschale

- L: Längsachse
- W: Winkel

## Patentansprüche

1. Buchsenlager, aufweisend
ein Innenteil (10),
ein Außenteil (16),
eine hauptsächlich in radialer Richtung wirkende Radialfeder (22), welche sich in radialer Richtung zwischen dem Innenteil (10) und dem Außenteil (16) erstreckt, und
eine hauptsächlich in axialer Richtung wirkende Axialfeder (20), welche sich zumindest abschnittsweise in axialer Richtung zwischen dem Innenteil (10) und dem Außenteil (16) erstreckt, wobei
die Radialfeder (22) und die Axialfeder (20) derart ausgebildet und/oder angeordnet sind, dass die radiale Steifigkeit des Buchsenlagers durch die Radialfeder (22) und die axiale Steifigkeit des Buchsenlagers durch die Axialfeder (22) unabhängig voneinander einstellbar sind, wobei die Axialfeder (20) in axialer Richtung am Innenteil (10) und Außenteil (16) angreift und die Radialfeder (22) und die Axialfeder (20) als voneinander getrennte Bauteile ausgebildet sind, **dadurch gekennzeichnet, dass** das Innenteil (10) einteilig ausgebildet ist.

2. Buchsenlager nach Anspruch 1,
**dadurch gekennzeichnet,**
**dass** ein Verbindungselement (24) vorgesehen ist, über das die Radialfeder (22) und die Axialfeder (20) miteinander verbunden sind.

3. Buchsenlager nach Anspruch 1 oder 2,
**dadurch gekennzeichnet,**
**dass** die Radialfeder (22) wenigstens oder genau zwei, drei, vier, fünf, sechs, sieben oder acht Stege (26) aufweist, welche sich in radialer Richtung zwischen dem Innenteil (10) und dem Außenteil (16) erstrecken.

4. Buchsenlager nach einem der vorhergehenden Ansprüche,
**dadurch gekennzeichnet,**
**dass** genau eine Axialfeder (20) vorgesehen ist.

5. Buchsenlager nach einem der vorhergehenden Ansprüche,
**dadurch gekennzeichnet,**
**dass** die Axialfeder (20) eine, vorzugsweise geteilte, Halbschale (28) aufweist.

6. Buchsenlager nach einem der vorhergehenden Ansprüche,
**dadurch gekennzeichnet,**
**dass** wenigstens eine Innenseite der Axialfeder (20) mit einer zur Längsachse (L) des Innenteils (10) parallelen Achse einen spitzen Winkel (W) einschließt.

7. Buchsenlager nach einem der vorhergehenden Ansprüche,
**dadurch gekennzeichnet,**
**dass** sich die Axialfeder (20) stirnseitig am Innenteil und Außenteil abstützt.

8. Buchsenlager nach einem der vorhergehenden Ansprüche,
**dadurch gekennzeichnet,**
**dass** das Innenteil (10) und/oder das Außenteil (16) eine Abwinkelung als Angriffsbereich für die Axialfeder (20) aufweist.

9. Verfahren zur Herstellung eines Buchsenlagers nach einem der vorhergehenden Ansprüche, bei dem
eine sich in radialer Richtung zwischen einem Innenteil (10) und einem Außenteil (16) erstreckende, hauptsächlich in radialer Richtung wirkende Radialfeder (22) und eine sich zumindest abschnittsweise zwischen dem Innenteil (10) und dem Außenteil (16) erstreckende, hauptsächlich in axialer Richtung wirkende Axialfeder (20) an das Innenteil (10) und das Außenteil (16) in einem Arbeitsschritt anvulkanisiert werden.

## Claims

1. Bush bearing, comprising
an inner part (10),
an outer part (16), a radial spring (22) which acts mainly in the radial direction and extends in the radial direction between the inner part (10) and the outer part (16), and
an axial spring (20) which acts mainly in the axial direction and at least sections of which extend in the axial direction between the inner part (10) and the outer part (16), wherein
the radial spring (22) and the axial spring (20) are designed and/or disposed in such a way that, by means of the radial spring (22), the radial stiffness of the bush bearing and, by means of the axial spring (20), the axial stiffness of the bush bearing can be adjusted independently of one another, wherein
the axial spring (20) engages in the axial direction on the inner part (10) and outer part (16) and the radial spring (22) and the axial spring (20) are designed as separate components,
**characterised in that**
the inner part (10) is designed as one piece.

2. Bush bearing according to claim 1,
**characterised in that**
a connecting member (24) is provided, via which the radial spring (22) and the axial spring (20) are connected to one another.

3. Bush bearing according to claims 1 or 2,
**characterised in that**
the radial spring (22) comprises at least or exactly two, three, four, five, six, seven or eight webs (26) which extend in the radial direction between the inner part (10) and the outer part (16).

4. Bush bearing according to any of the preceding claims,
**characterised in that**
exactly one axial spring (20) is provided.

5. Bush bearing according to any of the preceding claims,
**characterised in that**
the axial spring (20) comprises a, preferably split, half-shell (28).

6. Bush bearing according to any of the preceding claims,
**characterised in that**
at least one inner side of the axial spring (20) forms an acute angle (W) with an axis parallel with the longitudinal axis (L) of the inner part (10).

7. Bush bearing according to any of the preceding claims,
**characterised in that**
the axial spring (20) is supported on the end faces of the inner part and outer part.

8. Bush bearing according to any of the preceding claims,
**characterised in that**
the inner part (10) and/or the outer part (16) has an angled portion as an engagement area for the axial spring (20).

9. Method for manufacturing a bush bearing according to any of the preceding claims, in which
a radial spring (22) extending in the radial direction between an inner part (10) and an outer part (16) acting mainly in the radial direction, and an axial spring (20) extending at least section-wise between the inner part (10) and the outer part (16) and acting mainly in the axial direction are vulcanised onto the inner part (10) and the outer part (16) in one work step.

## Revendications

1. Palier à douille, comprenant
une partie intérieure (10),
une partie extérieure (16),
un ressort radial (22) agissant principalement dans la direction radiale, qui s'étend dans la direction radiale entre la partie intérieure (10) et la partie extérieure (16), et
un ressort axial (20) agissant principalement dans la direction axiale, qui s'étend au moins par section dans la direction axiale entre la partie intérieure (10) et la partie extérieure (16),
dans lequel
le ressort radial (22) et le ressort axial (20) sont conçus et/ou disposés de telle sorte que la rigidité radiale du palier à douille est réglable par le ressort radial (22) et que la rigidité axiale du palier à douille est réglable par le ressort axial (20), indépendamment l'une de l'autre, dans lequel le ressort axial (20) agit dans la direction axiale sur la partie intérieure (10) et sur la partie extérieure (16), et
le ressort radial (22) et le ressort axial (20) sont conçus comme des composants séparés l'un de l'autre,
**caractérisé en ce que**
la partie intérieure (10) est réalisée d'un seul tenant.

2. Palier à douille selon la revendication 1,
**caractérisé en ce que**
il est prévu un élément de liaison (24) par lequel le ressort radial (22) et le ressort axial (20) sont reliés entre eux.

3. Palier à douille selon la revendication 1 ou 2,
**caractérisé en ce que**
le ressort radial (22) présente au moins ou exactement deux, trois, quatre, cinq, six, sept ou huit barrettes (26) qui s'étendent dans la direction radiale entre la partie intérieure (10) et la partie extérieure (16).

4. Palier à douille selon l'une des revendications précédentes,
**caractérisé en ce que**
il est prévu exactement un ressort axial (20).

5. Palier à douille selon l'une des revendications précédentes,
**caractérisé en ce que**
le ressort axial (20) présente une demi-coque (28), de préférence divisée.

6. Palier à douille selon l'une des revendications précédentes,
**caractérisé en ce que**
au moins un côté intérieur du ressort axial (20) forme un angle aigu (W) avec un axe parallèle à l'axe longitudinal (L) de la partie intérieure (10).

7. Palier à douille selon l'une des revendications précédentes,
**caractérisé en ce que**
du côté frontal, le ressort axial (20) se soutient contre la partie intérieure et contre la partie extérieure.

8. Palier à douille selon l'une des revendications précédentes,
**caractérisé en ce que**
la partie intérieure (10) et/ou la partie extérieure (16) présente(nt) une angulation à titre de zone d'action pour le ressort axial (20).

9. Procédé de fabrication d'un palier à douille selon l'une des revendications précédentes, dans lequel
un ressort radial (22), s'étendant dans la direction radiale entre une partie intérieure (10) et une partie extérieure (16) et agissant principalement dans la direction radiale, et un ressort axial (20), s'étendant au moins par section entre la partie intérieure (10) et la partie extérieure (16) et agissant principalement dans la direction axiale, sont vulcanisés sur la partie intérieure (10) et sur la partie extérieure (16) en une seule étape de travail.
